# EUROPÄISCHE PATENTSCHRIFT

(11) **EP 0 546 508 B1**
(45) Veröffentlichungstag und Bekanntmachung des Hinweises auf die Patenterteilung: **04.02.1998**
(21) Anmeldenummer: 92120929.2
(22) Anmeldetag: 09.12.1992
(51) Int. Cl.: F04D 29/42

(54) **Radialgebläse**
Radial blower
Ventilateur radial

(30) Priorität: 13.12.1991 DE 4141106
(43) Veröffentlichungstag der Anmeldung: 16.06.1993
(73) Patentinhaber: Papst Licensing GmbH, 78549 Spaichingen (DE)
(72) Erfinder: Amrhein, Wolfgang, Dr., W-7744 Erdmannsweiler (DE); Engelberger, Reimund, W-7742 St. Georgen (DE); Fürst, Helmut, W-7730 VS-Schwenningen (DE); Graf, Bernd, W-7742 St. Georgen-Brigach (DE); Schneider, Josef, W-7742 S. Georgen 4 (DE)
(74) Vertreter: Müller, Hans, Dipl.-Ing.

(56) Entgegenhaltungen:
- EP-A- 0 450 272
- DE-C- 810 657
- DE-U- 8 914 525
- DE-U- 9 116 263
- FR-A- 1 083 921
- US-A- 3 093 299
- US-A- 4 919 592

## Beschreibung

Die Erfindung betrifft ein Radialgebläse für gasförmige Medien.

Es ist allgemein bekannt, Radialgebläse mit einer vor dem Auslaß angeordneten Spiralkammer zu versehen, wobei im Normalfall diese Spiralkammer das Radiallaufrad umgibt. In einem solchen Fall spricht man von einer Außenspiralkammer. Es ist jedoch auch möglich, statt einer solchen Außenspiralkammer eine Innenspiralkammer vorzusehen, die neben dem Radiallaufrad angeordnet ist und das das Laufrad umströmende Gas aufnimmt. Ein solches Radialgebläse mit Innenspiralkammer ist z. B. der Literaturstelle "Bruno Eck, Ventilatoren, Springer-Verlag, 5. Auflage 1972, S. 212 und 213" zu entnehmen. Solche Innenspiralgehäuse vermindern nicht nur den Platzbedarf solcher Radialgebläse in radialer Richtung, sondern haben darüber hinaus den Vorteil, daß die Außenbegrenzung des Gehäuses zylindrisch sein kann, wenn die Innenspirale nach innen hin entwickelt ist.

In vielen Fällen ist es erwünscht oder sogar erforderlich, bei gegebener Förderleistung und bei gegebenem Druck das Geräusch niedrig zu halten oder zu reduzieren, ohne dabei die äußeren Abmessungen eines Gebläses wesentlich zu vergrößern.

Ein Radialgebläse der eingangs genannten, gattungsgemäßen Art ist aus der EP-A-0 450 272 bekannt. Dieses Radialgebläse besitzt ein Radiallaufrad und ein das Radiallaufrad aufnehmendes Gehäuse, welches einen axialen Einlaß, eine Spiralkammer und einen etwa tangentialen Auslaß aufweist. Die Spiralkammer, in die sich der tangentiale Auslaß erstreckt, ist eine Innenspiralkammer. Das Radiallaufrad weist auf der dem Einlaß abgewandten Seite eine scheibenartige Verdickung der das Laufrad antreibenden Nabe auf. Die Radialschaufeln des Laufrades sind in axialer Richtung auskragend an dieser scheibenartigen Verdickung befestigt. Diese als hintere Deckscheibe bezeichnete Verdickung ist im Durchmesser bewußt sehr klein im Verhältnis zum Durchmesser des Laufrades gehalten, so daß die Schaufeln bis zur Umfangswand des Gehäuses in radialer Richtung praktisch frei auskragen.

Durch an den Schaufeln in axialer Richtung angebrachte vordere Deckscheiben wird der geförderte Gasstrom in die den Deckscheiben axial gegenüberliegende Innenspiralkammer umgeleitet. Die sich zur hinteren Deckscheibe konisch vergrößernde Nabenverdickung dient zur Umlenkung des das Laufrad axial anströmenden Gases, weniger zur Abschirmung des hinter dem Laufrad und damit hinter dessen Schaufeln liegenden Gehäusedeckels.

Der vorliegenden Erfindung liegt die Aufgabe zugrunde, ein Radialgebläse, das günstiges Druckverhalten zeigt, derart zu verbessern, daß bei gegebenem Druckaufbau und gegebener Förderleistung das Geräuschverhalten wesentlich verbessert wird.

Diese Aufgabe wird bei einem Radialgebläse der vorstehend genannten, gattungsgemäßen Art durch die Merkmale des Patentanspruchs 1 gelöst. Weiterbildungen sind Gegenstand von Unteransprüchen.

Bei dem erfindungsgemäßen Radialgebläse erweist es sich von Vorteil, daß durch das Anordnen von Druckausgleichsöffnungen in der Bodenscheibe der sich beim Betrieb aufbauende Überdruck auf einfache Weise sehr wirksam von der Welle des Laufrades ferngehalten werden kann, trotz verbesserter Förderleistung und verbessertem Geräuschverhalten. Für den Fall, daß es sich um ein Gebläse für gasförmige Medien in der Form von Luft handelt, müssen normalerweise keine Vorkehrungen getroffen werden, daß die Gasführung vom Einlaß zum Auslaß keine undichten Stellen nach außen enthält, z. B. im Bereich des Antriebs bzw. der Lagerung der Welle des Laufrades. In solchen Fällen jedoch, wo statt Luft chemische oder hochexplosive Gase gefördert werden sollen, kommt es auf eine absolute Dichtheit an, der die erfindungsgemäße Ausbildung Rechnung trägt.

Damit diese Druckausgleichsöffnungen nicht zu einer Erhöhung des Laufgeräusches des Radialgebläses führen, können, in Laufrichtung gesehen, vor den Öffnungen Erhebungen in der Form von Spoilern vorgesehen werden. Damit durch diese Druckausgleichsöffnungen keine zu großen Druckverluste von der Auslaßseite zur Einlaßseite auftreten, ist vorzugsweise zwischen der Bodenscheibe und dem Deckelteil des Gehäuses eine Labyrinthdichtung mit axial ineinandergreifenden Ringstegen vorgesehen, die den Strömungswiderstand vom Auslaßbereich zu den Druckausgleichsöffnungen erhöht.

Eine besonders vorteilhafte konstruktive Ausführungsform besteht darin, daß das Deckelteil des Gehäuses mit einem nach außen ragenden Lagerrohr für den Antriebsmotor versehen ist. Vorzugsweise sind Deckelteil und Lagerrohr aus einem Teil gefertigt. Der Antriebsmotor ist bei einer solchen Konstruktion zweckmäßigerweise als Außenläufermotor ausgebildet, wobei die Welle des Außenläufers im Lagerrohr auf entsprechenden Lagern gelagert ist und der Innenstator außen auf dem Lagerrohr angeordnet ist. Der Antriebsmotor ist zur Regelung der geförderten Gasmenge vorzugweise mit einer elektronischen Motorsteuerung/-regelung versehen, und das Deckelteil des Gehäuses dient hierbei gleichzeitig als Kühlkörper für die entsprechenden Bauelemente. Vorzugsweise ist der Antriebsmotor ein bürstenloser Gleichstrommotor.

Nach einer weiteren Ausführungsform der Erfindung besteht die Spiralkammer aus einem ersten Abschnitt in der Art eines Außenspiralabschnitts und einem sich seitlich anschließenden Innenspiralabschnitt, wobei sich der etwa tangentiale Auslaß sowohl in den Außenspiralabschnitt als auch in den Innenspiralabschnitt erstreckt.

Eine weitere Verbesserung des Geräuschverhaltens wird dadurch erzielt, daß die Auslaßhöhe des Auslaßquerschnittes, in Umfangsrichtung gesehen, des etwa tangentialen Auslasses im Bereich des Außenspiralabschnittes größer als die Auslaßhöhe im Bereich des Innenspiralabschnittes ist, und daß der Übergang zwischen den beiden Bereichen stetig ist.

Eine konstruktiv und fertigungstechnisch besonders vorteilhafte Ausführungsform ist derart ausgebildet, daß das Gehäuse aus einem das Radiallaufrad umgebenden Gehäuseteil, das den axialen Einlaß an seinem einen Ende sowie den etwa tangentialen Auslaß enthält, und einem das andere Ende des Gehäuseteils abschließenden Deckteil besteht, an dem ein Antriebsmotor für das Radiallaufrad angeordnet ist. Der Innenspiralabschnitt wird vorzugsweise zwischen dem Gehäuseteil und dem in dieses hineinragenden Deckteil gebildet.

Zur Realisierung des erfindungsgemäßen Radialgebläses mit zwei Spiralkammerabschnitten, nämlich dem Außenspiralabschnitt und dem sich anschließenden Innenspiralabschnitt, braucht die Innenform des Gehäuseteils keine komplizierte Form aufzuweisen wie beispielsweise eine lineare oder logarithmische Spiralform, sondern es genügt eine etwa zylindrische oder kegelige Innenform, wenn die Achse des Radiallaufrades gegenüber der Mitte des Gehäuseteils versetzt ist, um den Außenspiralabschnitt weitgehend genau darzustellen. Eine weitere Verbesserung wird dadurch erzielt, daß der Übergang zwischen einer den axialen Einlaß aufweisenden Stirnwand und der das Radiallaufrad umgebenden Umfangswand des Gehäuseteils im Bereich des größeren Querschnitts des Außenspiralabschnittes mit einer Abschrägung oder Abrundung versehen ist.

Der vorstehend beschriebene Versatz der Achse des Radiallaufrades gegenüber der Mitte des Gehäuseteils ist auch besonders dann vorteilhaft, wenn der Einlaß nicht in axialer Richtung, sondern über einen Krümmer, beispielsweise 90° -Krümmer, angeschlossen ist. Ein solcher Anschluß des Einlasses ist in verschiedenen Anwendungsfällen von Vorteil. Die sich hierdurch ergebende Unsymmetrie der Gasströmung wird durch den Versatz der Achse des Radiallaufrades weitgehend kompensiert.

Die Erfindung wird nachfolgend anhand eines Ausführungsbeispiels unter Bezug auf die beigefügten Zeichnungen näher erläutert.

Es zeigen:
- Fig. 1: einen Längsschnitt durch das erfindungsgemäße Radialgebläse;
- Fig. 2: eine Endansicht eines Gehäuseteils des Radialgebläses nach Fig. 1, in Fig. 1 von rechts gesehen;
- Fig. 3: eine Seitenansicht des Gehäuseteils nach Fig. 2;
- Fig. 4: eine Einzelheit aus dem Radiallaufrad des Radialgebläses nach Fig. 1;
- Fig. 5: eine Endansicht eines Deckelteils des Radialgebläses nach Fig. 1, in Fig. 1 von rechts gesehen; und
- Fig. 6: eine Seitenansicht des Deckelteils nach Fig. 5.

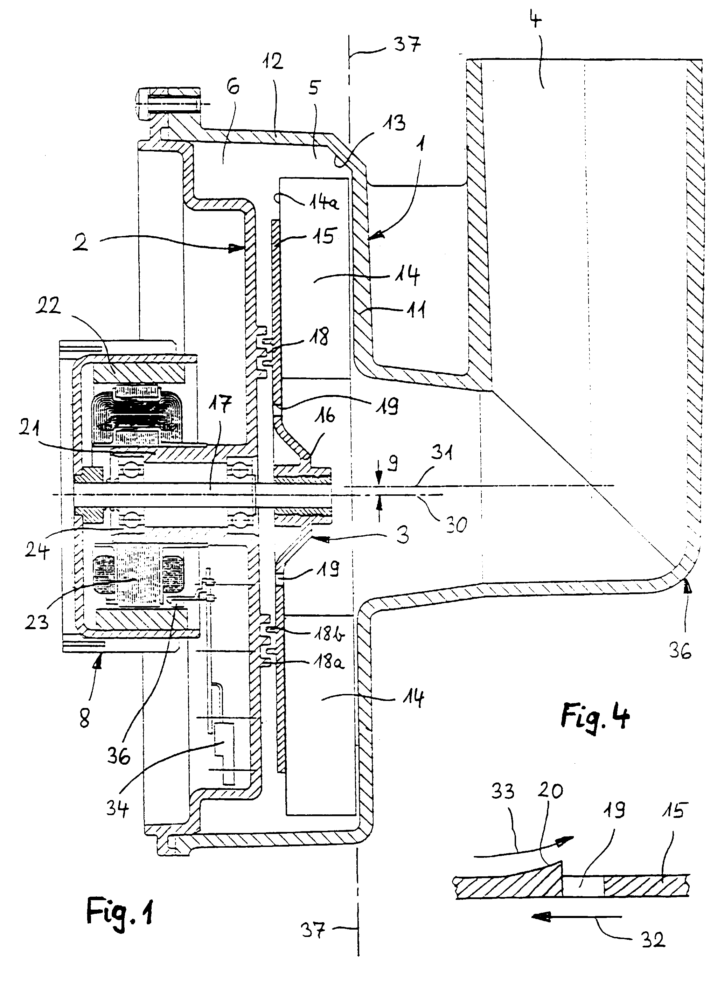

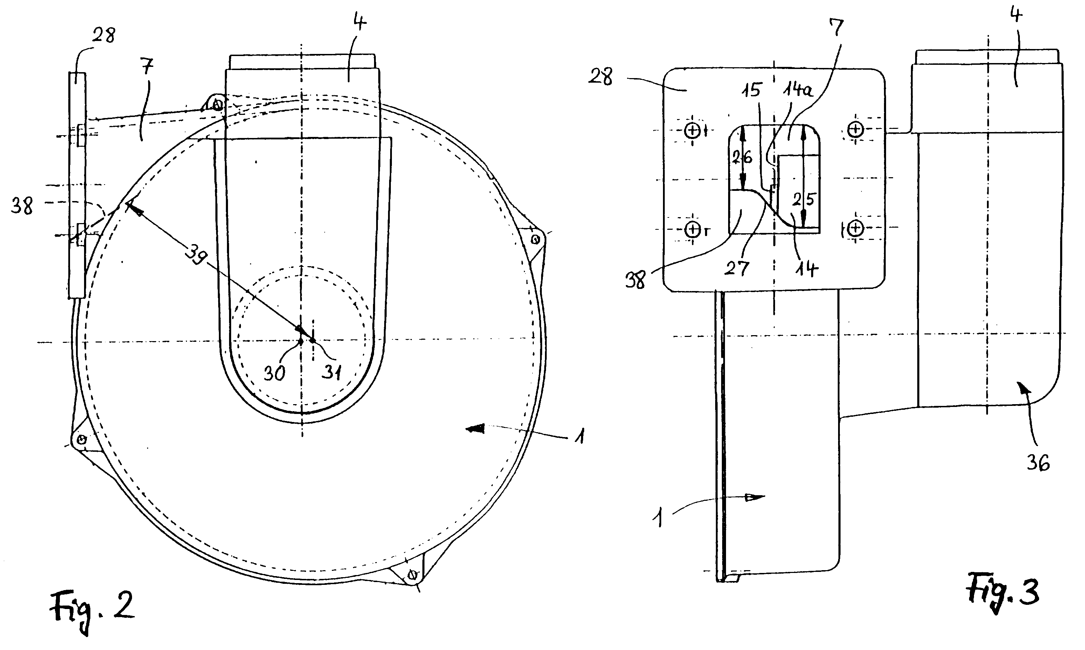

Das Radialgebläse nach Fig. 1, dessen Teile im einzelnen auch in den Fig. 2 bis 6 dargestellt sind, enthält ein Gehäuseteil 1 mit einem über einen 90°-Krümmer 36 angeschlossenen Einlaß 4 und ein Deckelteil 2, das teilweise in das Gehäuseteil 1 hineinragt und mit diesem verschraubt ist. Das Deckelteil 2 ist mit einem angeformten Lagerrohr 21 versehen, auf dem ein Antriebsmotor 8 angeordnet ist. Auf einer Welle 17 des Antriebsmotors 8 ist mittels einer Nabe 16 ein Radiallaufrad 3 gelagert, das nur eine Bodenscheibe 15 und eine Vielzahl von Radialschaufeln 14 aufweist. Die Radialschaufeln 14 sind im vorliegenden Fall rückwärts gekrümmt. Da das Radiallaufrad 3 keine zweite Deckscheibe aufweist, laufen die in axialer Richtung offenen Radialschaufeln in geringem Abstand an einer Stirnwand 11 des Gehäuseteils 1 vorbei. Es ist jedoch auch möglich, das Radiallaufrad 3 mit zwei Boden- bzw. Deckscheiben zu versehen.

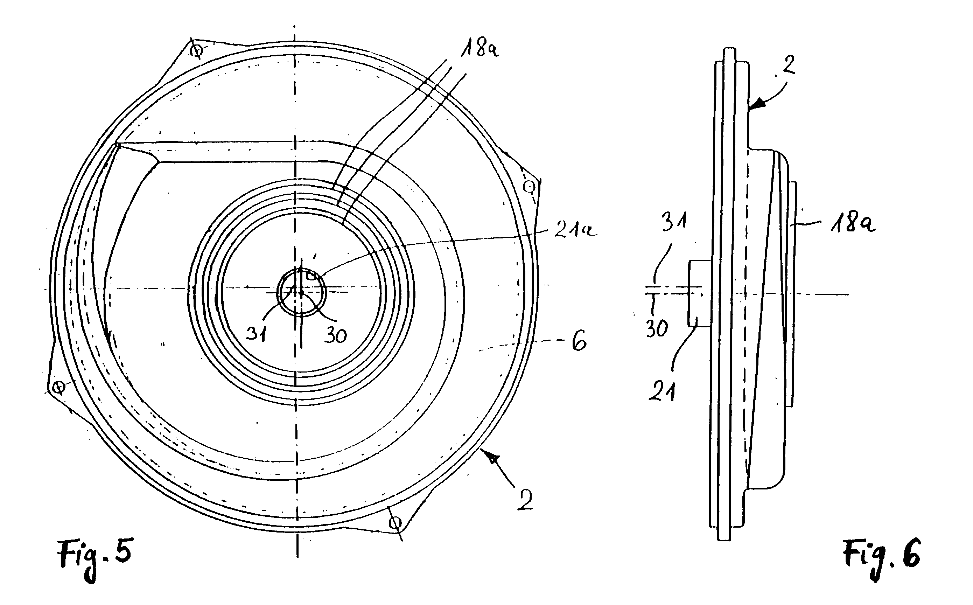

Zwischen der äußeren Fläche des Deckelteils 2 und der Innenfläche einer Umfangswand 12 des Gehäuseteils 1 wird außerhalb des axialen Bereiches des Radiallaufrades 3 eine Innenspiralkammer gebildet, die in der vorliegenden Beschreibung als Innenspiralabschnitt 6 bezeichnet wird. Bei Radialgebläsen mit einer Innenspiralkammer wie im vorliegenden Beispiel wäre der das Radiallaufrad 3 umgebene Umfangsbereich normalerweise von ringförmigem Querschnitt (s. hierzu die anfangs angegebene Literaturstelle "Bruno Eck, Ventilatoren", Abb. 204 auf Seite 213). In der vorliegenden Ausführungsform, s. insbesondere hierzu Fig. 1 und 5, ist die Rotorachse 30 des Radiallaufrades 3 jedoch gegenüber der Gehäuseachse 31 des etwa zylindrischen Gehäuseteils 1 um einen Betrag 9 derart versetzt, daß sich der Abstand 39 zwischen dem Radiallaufrad 3 und einer Zunge 38 vergrößert, und zwar sowohl in der in Fig. 1 gezeigten Ebene als auch in einer senkrecht hierauf stehenden Ebene, s. hierzu insbesondere Fig. 5. Dies hat zur Folge, daß sich um den Umfang des Radiallaufrades 3 bzw. um die Umhüllende der Radialschaufeln 14, ein nicht-zylindrischer Ringraum bildet, der einer Außenspiralkammer angenähert ist. Dieser Umfangsbereich wird daher auch nachfolgend als Außenspiralabschnitt 5 (Fig. 1) bezeichnet.

In den Fig. 2 und 3 ist nun ein Auslaß 7 am Gehäuseteil 1 zu sehen, der an einem Auslaßflansch 28 endet. Der Auslaß 7 ist etwa tangential am Gehäuseteil 1 angeordnet. In Fig. 3 ist gezeigt, daß sich der etwa tangentiale Auslaß 7 sowohl in den Außenspiralabschnitt 5 als auch in den Innenspiralabschnitt 6 erstreckt, wobei die Grenze zwischen beiden Abschnitten die Bodenscheibe 15 ist. Mittels einer Zunge 38 ist der Querschnitt im Au-ßenspiralbereich 5 größer als der Querschnitt im Innenspiralabschnitt 6 gestaltet, was die unterschiedlichen Auslaßhöhen 25 bzw. 26, gemessen in Umfangsrichtung, andeuten. Um die Geräuschentwicklung zu vermindern, ist der Übergang 27 zwischen den beiden verschiedenen Auslaßhöhen 25 und 26 stetig, und die axial gerichteten Stirnkanten 14a der Radialschaufeln 14 befinden sich in diesem Übergangsbereich 27. Zur Verbesserung der Luftführung und zur weiteren Geräuschminderung ist der Übergang von der Stirnwand 11 zur Umfangswand 12 des Gehäuseteils 1 mit einer inneren Abschrägung oder Abrundung 13 versehen.

Um das vorliegende Radialgebläse nach außen hin gasdicht zu machen, z.B. zum Fördern von chemischen Gasen oder hochexplosiven Gasgemischen, muß verhindert werden, daß der auf der Auslaßseite bzw. in den Spiralabschnitten 5, 6 herrschende Überdruck zwischen der Bodenscheibe 15 und dem Deckelteil 2 in den Bereich der Welle 17 und der Lager 24 gelangt und somit über den Antriebsmotor 8 ins Freie treten kann. Dieses Ziel wird dadurch erreicht, daß die Bodenscheibe 15 zwischen der Nabe 16 und dem Bereich der Radialschaufeln 14 mit Öffnungen 19 versehen ist, die dazu dienen, einen Druckausgleich zwischen beiden Seiten zu schaffen, damit kein Überdruck aus den Spiralabschnitten 5, 6 in den Bereich der Welle 17 bzw. der Lager 24 und damit nach außen gelangt. Da diese Öffnungen 19 jedoch unter Umständen zu einer zusätzlichen Geräuschentwicklung führen können, sind vor diesen Öffnungen 19 (in Umfangsrichtung) Erhebungen 20 vorgesehen, die als Spoiler wirken. In Fig. 4 ist eine Einzelheit gezeigt, und zwar bewegt sich der Bereich der Öffnungen 19 in Richtung des Pfeiles 32 (in Umfangsrichtung). Die Strömung des zu fördernden Gases wird entsprechend dem Pfeil 33 an der Erhebung 20 abgelenkt, so daß keine scharfen Kanten der Öffnung 19 angeströmt werden.

Die Abdichtungswirkung wird noch weiter dadurch verbessert, daß zwischen dem Deckelteil 2 und der Bodenscheibe 15 eine Labyrinthdichtung 18 mit ineinandergreifenden Ringstegen 18a und 18b vorgesehen ist, die einen etwaigen Ausgleichsstrom von der Auslaß- zur Einlaßseite behindert. Diese Labyrinthdichtung 18 bewirkt zusammen mit den Öffnungen 19, daß im Bereich der Welle 17 oder Lager 24 kein zu hoher Druck entsteht und nach außen entweicht.

Das Gehäuse, d.h. sowohl das Gehäuseteil 1 als auch das Deckelteil 2 sind jeweils z.B. aus Aludruckguß hergestellt. Auf diesem Wege ist an dem eigentlichen Gehäuseteil 1 auch über einen 90°-Krümmer 36 der Einlaß 4 angeformt, während am Deckelteil 2 das Lagerrohr 21 angeformt ist. Das Radiallaufrad 3 ist vorzugsweise aus Kunststoff gespritzt, wobei in die Nabe 16 eine Lagerbuchse eingelassen ist. Zur Förderung von explosiven Gasgemischen wird jedoch zweckmäßigerweise auch das Radiallaufrad 3 aus elektrisch leitendem Material, z.B. Metall, hergestellt, und zur Verhinderung von elektrostatischen Aufladungen ist die Rotorwelle 17 mittels einer Anlaufkuppe aus leitendem Material geerdet.

Der Antriebsmotor 8 ist im vorliegenden Fall als Außenläufermotor ausgebildet, und zwar als bürstenloser Gleichstrommotor. Der Innenstator 23 ist außen auf das Lagerrohr 21 aufgesetzt, und zwar entweder aufgepreßt oder aufgeklebt, während der Außenläufer als Permanentaußenläufer ausgebildet ist und über eine entsprechende Glocke und Nabe auf der Welle 17 befestigt ist. Der Antriebsmotor 8 ist also sozusagen in das Deckelteil 2 integriert, ohne daß ein besonderer Befestigungsflansch erforderlich wäre. Die Lagerung der Welle 17 erfolgt durch zwei Kugellager 24.

Die vorliegende Bauweise erlaubt es auch, entsprechenden Raum zwischen dem Antriebsmotor 8 und dem Deckelteil 2 zur Aufnahme der Bauelemente für eine Motorsteuerung bzw. Motorregelung 34 vorzusehen, die auf einer entsprechenden Leiterplatte angeordnet sind. Ebenso kann an dieser Leiterplatte ein Positionsgeber, hier ein Hallsensor 36, befestigt sein, der die Rotorposition abtastet und die Bestromung der Wicklungen des Stators 23 steuert. Die Bauelemente der Motorsteuerung/Motorregelung 34 können zur Kühlung die Außenfläche des Deckelteils 2 ausnutzen, wie in Fig. 1 durch strichpunktierte Linien angedeutet ist.

Eine andere Gehäusekonstruktion kann derart gestaltet sein, daß das Gehäuse entlang einer Trennungsebene 37 (in Fig. 1 strichpunktiert eingezeichnet) geteilt ist, d.h., daß ein Gehäuseteil aus der das Radiallaufrad 3 umgebenden Umfangswand 12 und einer die stirnseitig abschließenden Deckelwand (entsprechend dem sonst getrennten Deckelteil 2), die den Antriebsmotor 8 trägt, besteht. Das andere Gehäuseteil besteht dann aus der an das Radiallaufrad 3 angrenzenden Stirnwand 11 und dem Einlaßstutzen bzw. dem 90°-Krümmer 36.

## Patentansprüche

1. Radialgebläse für gasförmige Medien,
- mit einem Radiallaufrad (3) und einem das Radiallaufrad aufnehmenden Gehäuse (1, 2), das einen axialen Einlaß (4), eine Spiralkammer (5, 6) und einen etwa tangentialen Auslaß (7) aufweist, wobei
- das Radiallaufrad (3) auf der dem Einlaß (4) abgewandten Seite eine Radialschaufeln (14) tragende Bodenscheibe (15) aufweist, mit der das Radiallaufrad (3) antreibbar gelagert ist, und wobei
- die Bodenscheibe (15) zwischen der Nabe (16) und dem Bereich der Radialschaufeln (14) mit Öffnungen (19) zum Druckausgleich versehen ist.

2. Radialgebläse nach Anspruch 1,
**dadurch gekennzeichnet**, daß
- vor den Öffnungen (19), in Laufrichtung (32) gesehen, Erhebungen (20) in der Form von Spoilern vorgesehen sind.

3. Radialgebläse nach Anspruch 1 oder 2,
**dadurch gekennzeichnet**, daß
- zwischen der Bodenscheibe (15) und einem Deckelteil bzw. einer Deckelwand (2) eine Labyrinthdichtung (18) mit axial ineinandergreifenden Ringstegen (18a, 18b) vorgesehen ist, wobei das Deckelteil bzw. die Deckelwand (2) dem axialen Einlaß (4) strömungsseitig gegenüberliegt.

4. Radialgebläse nach einem der vorstehenden Ansprüche,
**dadurch gekennzeichnet**, daß
- das Deckelteil bzw. die Deckelwand (2) des Gehäuses mit einem nach außen ragenden Lagerrohr (21) für den Antriebsmotor (8) versehen ist.

5. Radialgebläse nach Anspruch 4,
**dadurch gekennzeichnet**, daß
- das Deckelteil bzw. die Deckelwand (2) einstückig mit dem Lagerrohr (21) verbunden ist.

6. Radialgebläse nach Anspruch 4 oder 5,
**dadurch gekennzeichnet**, daß
- der Antriebsmotor (8) als Außenläufermotor ausgebildet ist, und
- das Lagerrohr (21) die Welle (17) des Außenläufers (22) lagert und außen den Innenstator (23) trägt.

7. Radialgebläse nach einem der vorstehenden Ansprüche,
**dadurch gekennzeichnet**, daß
- der zum Antrieb des Radiallaufrades (3) vorhandene Antriebsmotor (8), insbesondere ein bürstenloser Gleichstrommotor, mit einer elektronischen Motorsteuerung (34) versehen ist, und
- das Deckelteil bzw. die Deckelwand (2) des Gehäuses (1, 2) als Kühlkörper für die elektronischen Bauelemente dient.

8. Radialgebläse nach einem der vorstehenden Ansprüche,
**dadurch gekennzeichnet**, daß
- die Spiralkammer (5, 6), einen ersten Abschnitt in Art eines Innenspiralabschnittes (6) besitzt, in den sich der etwa tangentiale Auslaß (7) erstreckt,
- die Spiralkammer (5, 6) einen weiteren Abschnitt in Art eines Außenspiralabschnittes (5) besitzt, der in Strömungsrichtung vor dem Innenspiralabschnitt (6) ausgebildet ist,
- sich der tangentiale Auslaß (7) auch in den Außenspiralabschnitt (5) erstreckt.

9. Radialgebläse nach Anspruch 8,
**dadurch gekennzeichnet**, daß
- die Auslaßhöhe (25) des Auslaßquerschnittes, in Umfangsrichtung gesehen, des etwa tangentialen Auslasses (7) im Bereich des Außenspiralabschnittes größer als die Auslaßhöhe (26) im Bereich des Innenspiralabschnittes (6) ist, und
- der Übergang (27) zwischen den beiden Bereichen stetig ist.

10. Radialgebläse nach Anspruch 9,
**dadurch gekennzeichnet**, daß
- die axial gerichteten Stirnkanten (14a) der Radialschaufeln (14) sich vorwiegend im Übergangsbereich (27) befinden.

11. Radialgebläse nach einem der Ansprüche 8 bis 10,
**dadurch gekennzeichnet**, daß
- das Gehäuse (1, 2) aus einem das Radiallaufrad (3) umgebenden Gehäuseteil (1), das den axialen Einlaß (4) an seinem einen Ende sowie den etwa tangentialen Auslaß (7) enthält, und einem das andere Ende des Gehäuseteils (1) abschließenden Deckelteil (2) besteht, an dem der Antriebsmotor (8) für das Radiallaufrad (3) angeordnet ist.

12. Radialgebläse nach einem der Ansprüche 8 bis 11,
**dadurch gekennzeichnet**, daß
- der Innenspiralabschnitt (6) zwischen der Umfangswand (12) und dem in dieses hineinragenden Deckelteil (2) bzw. der Deckelwand (2) gebildet ist.

13. Radialgebläse nach einem der vorstehenden Ansprüche,
**dadurch gekennzeichnet**, daß
- die das Radiallaufrad (3) umgebende Umfangswand (12) eine etwa zylindrische oder kegelige Innenform aufweist und eine Begrenzungsfläche des radial nach außen wirkenden Luftstromes darstellt, und
- die Achse (30) des Radiallaufrades (3) zur Bildung des Außenspiralabschnittes (5) gegenüber der Mitte (31) des Gehäuseteils (1) versetzt ist.

14. Radialgebläse nach Anspruch 13,
**dadurch gekennzeichnet**, daß
- die Versetzung des Radiallaufrades (3) zur Gehäuseachse (31) derart ist, daß der Abstand (39) zwischen Radiallaufrad (3) und einer die Auslaßhöhe (25, 26) begrenzenden Zunge (38) sich vergrößert.

15. Radialgebläse nach Anspruch 13 oder 14,
**dadurch gekennzeichnet**, daß
- der Übergang zwischen einer den axialen Einlaß (4) aufweisenden Stirnwand (11) und der das Radiallaufrad (3) umgebenden Umfangswand (12) im Bereich des größeren Querschnittes des Außenspiralabschnittes (5) mit einer Abschrägung oder Abrundung (13) versehen ist.

16. Radialgebläse nach einem der vorstehenden Ansprüche,
**dadurch gekennzeichnet**, daß
- der Einlaß (4) über einen Krümmer, insbesondere 90°-Krümmer (36), angeschlossen ist.

17. Radialgebläse nach einem der vorstehenden Ansprüche,
**dadurch gekennzeichnet**, daß
- das Gehäuse aus zwei Gehäuseteilen besteht, von denen das erste Gehäuseteil (1) eine das Radiallaufrad (3) umgebende Umfangswand (12), einen Übergangsbereich (13) und eine an das Radiallaufrad (3) angrenzende Stirnwand (11) mit einem axialen Einlaß (4) aufweist und von denen das zweite Gehäuseteil (2) eine rückseitig abschließende Deckelwand (2) mit integrierter Innenspirale und integriertem Lagerrohr (21) aufweist, derart, daß die Teilungsebene zwischen den beiden Gehäuseteilen zwischen der Umfangswand (12) und der abschließenden Deckelwand (2) verläuft.

18. Radialgebläse nach einem der vorstehenden Ansprüche,
**dadurch gekennzeichnet**, daß
- das Gehäuse aus zwei Gehäuseteilen besteht, von denen das erste Gehäuseteil (12, 2) eine das Radiallaufrad (3) umgebende Umfangswand (12) und einen diese stirnseitig abschließende Deckelwand (2), die den Antriebsmotor (8) für das Radiallaufrad (3) trägt, aufweist und von denen das zweite Gehäuseteil (11, 4) eine an das Radiallaufrad (3) angrenzende Stirnwand (11) und den axialen Einlaß (4) aufweist.

19. Radialgebläse nach Anspruch 18,
**dadurch gekennzeichnet**, daß
- die Teilungsebene (37) zwischen den beiden Gehäuseteilen zwischen der Umfangswand (12) und der Stirnwand (11) verläuft.

## Claims

1. A radial blower for gaseous fluids,
having a radial impeller (3) inside of a casing (1, 2), which is equipped with an axially arranged inlet (4), a spiral chamber (5, 6) and somewhat tangentially arranged outlet (4),
whereby the radial impeller (3) has a bottom disk (15) opposite to the inlet (4),
whereby the shovels (14) are fixed to this bottom disk and the radial impeller (3) is free wheeling supported by means of this bottom disk (15),
and whereby the bottom disk (15) is provided with openings (19) for pressure compensation, arranged between the hub (16) and the portion of the radial shovels (14).

2. A radial blower according to claim 1,
characterized in that there are risers (20) provided like spoilers before the openings (19), as viewed in the rotating direction (32).

3. A radial blower according to claim 1 or 2,
characterized in that a labyrinth seal (18) is provided that is made of axially meshing ring lands (18a, 18b) arranged between the bottom disk (15) and a cover assembly or a cover wall (2), whereby the cover assembly or the cover wall (2) is positioned opposite to the axial inlet (4) laterally to the flow direction.

4. A radial blower according to one of the previous claims,
characterized in that the cover assembly or the cover wall (2) of the casing is equipped with an outwardly extending bearing tube (21) for the drive motor (8).

5. A radial blower according to claim 4,
characterized in that the cover assembly or the cover wall (2) and the bearing tube (21) are a single-piece unit.

6. A radial blower according to claim 4 or 5,
characterized in that the drive motor (8) is an outer rotor motor, and that the bearing tube (21) supports the shaft (17) ofthe outer rotor (22) and that the inner stator (23) is attached to the outside of the bearing tube (21).

7. A radial blower according to one of the previous claims,
characterized in that the drive motor (8), in particular a brushless DC motor, for driving the radial impeller (3) is equipped with an electronic motor control device (34) and that the cover assembly or the cover wall (2) of the casing (1, 2) serves as a heat sink for the electronic components.

8. A radial blower according to one of the previous claims,
characterized in that the spiral chamber (5, 6) has a first portion as a kind of an inner spiral portion (6), in which somewhat tangential outlet (7) extends, and that the spiral chamber (5, 6) has a further portion as a kind of an outer spiral portion (5), which is arranged in front of the inner spiral chamber (6) (as viewed in flow direction), and that the tangential outlet (7) extends also into the outer spiral portion (5)

9. A radial blower according to claim 8,
characterized in that the outlet height (25) of the outlet section, as viewed in the radial direction, of somewhat tangential outlet in the region of the outer spiral portion, is larger than the outlet height (26) in the region of the inner spiral chamber (6), and that the transition (27) between both portions is continuous.

10. A radial blower according to claim 9,
characterized in that the greater part of the axially aligned front edges (14a) of the radial shovels (14) are positioned in the transition region (27).

11. A radial blower according to one of the claims 8 to 10,
characterized in that the casing (1, 2) consists of a housing portion (1), which surrounds the radial impeller (3), and is equipped with an axial inlet (4) at its one end and somewhat tangential outlet (7), and a cover assembly (2), which encloses the other end of the housing portion (1) and to which the drive motor (8) for the radial impeller (3) is attached.

12. A radial blower according to one of the claims 8 to 11,
characterized in that the inner spiral portion (6) is positioned between the circumferential wall 12 and the cover assembly (2) or cover wall (2) projecting therein.

13. A radial blower according to one of the previous claims,
characterized in that the inside of the circumferential wall (12) surrounding the radial impeller (3) is cylindrically or conically shaped and constitutes a boundary surface for the air flowing in the radial direction toward the circumferential edge, and that the axis (30) of the radial impeller (3) is offset in relation to the centre (31) of the casing part (1).

14. A radial blower according to claim 13,
characterized in that the radial impeller (3) is offset in relation to the casing axis (31) in such a manner that the distance (39) between the radial impeller (3) and a tongue (38) confining the outlet height (25, 26) is enlarged.

15. A radial blower according to claim 13 or 14,
characterized in that the transition between a front wall (11) equipped with the axial inlet (4) and the circumferential wall (12) surrounding the radial impeller (3) is provided with a chamfered or rounded portion (13) positioned in the region of the larger section of the outer spiral portion (5).

16. A radial blower according to one of the previous claims,
characterized in that the inlet (4) is coupled by means of an elbow, in particular by means of a 90°-elbow (36).

17. A radial blower according to one of the previous claims,
characterized in that the casing consists of two parts;
the first casing part (1) comprising a circumferential wall (12), which surrounds the radial impeller (3), a transition portion (13), and a front wall (11) adjacent to the radial impeller (3) and equipped with an axial inlet (4);
the second casing part (2) comprising a cover wall (2) for enclosing the casing from the back side, an integrated inner spiral and an integrated bearing tube (21), whereby the parting plane of these two casing parts is between the circumferential wall 12 and the enclosing cover wall (2).

18. A radial blower according to one of the previous claims,
characterized in that the casing consists of two casing parts;
the first casing part (12, 2) comprising a circumferential wall (12), which surrounds the radial impeller (3), and a cover wall (2) supporting the drive motor (8) for the radial impeller (3) and enclosing this circumferential wall (12) from the front side;
the second casing part (11, 4) comprising a front wall (11) adjacent to the radial impeller (3), and an axial inlet (4).

19. A radial blower according claim 18,
characterized in that the parting plane (37) between both casing parts is between the circumferential wall (12) and the front wall (11).

## Revendications

1. Soufflante radiale pour fluides gazeux,
- avec un rotor radial (3) et un carter (1, 2) qui reçoit le rotor radial et qui présente une admission axiale (4), une chambre spirale (5, 6) et une évacuation approximativement tangentielle (7),
- le rotor radial (3) présentant, sur le côté opposé à l'admission (4), un disque de fond (15) portant des pales radiales (14), par lequel le rotor radial (3) est monté en entraînement, et
- le disque de fond (15) étant pourvu, entre le moyeu (16) et la région des pales radiales (14), d'ouvertures (19) d'égalisation de pression.

2. Soufflante radiale selon la revendication 1, caractérisée en ce que des surélévations (20) sous la forme de déflecteurs sont prévues en avant des ouvertures (19), vues dans la direction de déplacement (32).

3. Soufflante radiale selon la revendication 1 ou 2, caractérisée en ce qu'une garniture d'étanchéité à labyrinthe (18), avec des nervures annulaires (18a, 18b) s'engrenant les unes dans les autres, est prévue entre le disque de fond (15) et un élément de couvercle ou encore une paroi de couvercle (2), l'élément de couvercle ou encore la paroi de couvercle (2) faisant face à l'admission axiale (4) du côté d'écoulement.

4. Soufflante radiale selon une des revendications précédentes, caractérisée en ce que l'élément de couvercle ou encore la paroi de couvercle (2) du carter est pourvu d'un palier tubulaire (21), faisant saillie vers l'extérieur, pour le moteur d'entraînement (8).

5. Soufflante radiale selon la revendication 4, caractérisée en ce que l'élément de couvercle ou encore la paroi de couvercle (2) est assemblé d'un seul tenant au palier tubulaire (21).

6. Soufflante radiale selon la revendication 4 ou 5, caractérisée en ce que
- le moteur d'entraînement (8) est réalisé sous forme de moteur à induit extérieur, et
- le palier tubulaire (21) reçoit l'arbre (17) de l'induit extérieur (22) et porte extérieurement le stator intérieur (23).

7. Soufflante radiale selon une des revendications précédentes, caractérisée en ce que
- le moteur d'entraînement (8) présent pour l'entraînement du rotor radial (3), notamment un moteur à courant continu sans balais, est pourvu d'une commande électronique de moteur (34), et
- l'élément de couvercle ou encore la paroi de couvercle (2) du carter (1, 2) sert de refroidisseur pour les composants électroniques.

8. Soufflante radiale selon une des revendications précédentes, caractérisée en ce que
- la chambre spirale (5, 6) possède une première partie sous la forme d'une partie spirale intérieure (6), dans laquelle s'étend l'évacuation approximativement tangentielle (7),
- la chambre spirale (5, 6) possède une autre partie sous la forme d'une partie spirale extérieure (5), qui est configurée avant la partie spirale intérieure (6) dans la direction d'écoulement,
- l'évacuation tangentielle (7) s'étend également dans la partie spirale extérieure (5).

9. Soufflante radiale selon la revendication 8, caractérisée en ce que
- la hauteur d'évacuation (25) de la section d'évacuation, considérée en direction circonférentielle, de l'évacuation approximativement tangentielle (7) dans la région de la partie spirale extérieure est plus grande que la hauteur d'évacuation (26) dans la région de la partie spirale intérieure (6), et
- la transition (27) entre les deux régions est progressive.

10. Soufflante radiale selon la revendication 9, caractérisée en ce que les bords d'attaque orientés axialement (14a) des pales radiales (14) se trouvent principalement dans la région de transition (27).

11. Soufflante radiale selon une des revendications 8 à 10, caractérisée en ce que le carter (1, 2) est constitué d'un élément de carter (1), qui entoure le rotor radial (3) et contient l'admission axiale (4) à une de ses extrémités ainsi que l'évacuation approximativement tangentielle (7), et d'un élément de couvercle (2), qui ferme l'autre extrémité de l'élément de carter (1) et sur lequel est disposé le moteur d'entraînement (8) pour le rotor radial (3).

12. Soufflante radiale selon une des revendications 8 à 11, caractérisée en ce que la partie spirale intérieure (6) est formée entre la paroi périphérique (12) et l'élément de couvercle (2) ou encore la paroi de couvercle (2), qui s'enfonce dans cette paroi périphérique (12).

13. Soufflante radiale selon une des revendications précédentes, caractérisée en ce que
- la paroi périphérique (12) entourant le rotor radial (3) présente une forme intérieure approximativement cylindrique ou conique, et constitue une face de délimitation pour le flux d'air agissant radialement vers l'extérieur, et
- l'axe (30) du rotor radial (3) est, pour former la partie spirale extérieure (5), décalé par rapport au milieu (31) de l'élément de carter (1).

14. Soufflante radiale selon la revendication 13, caractérisée en ce que le décalage du rotor radial (3) par rapport à l'axe (31) du carter est tel que la distance (39) entre le rotor radial (3) et une languette (38) délimitant la hauteur d'évacuation (25, 26) augmente.

15. Soufflante radiale selon la revendication 13 ou 14, caractérisée en ce que la transition entre une paroi frontale (11) présentant l'admission axiale (4) et la paroi périphérique (12) entourant le rotor radial (3), dans la région de la plus grande section de la partie spirale extérieure (5), est dotée d'un chanfreinage ou d'un arrondi (13).

16. Soufflante radiale selon une des revendications précédentes, caractérisée en ce que l'admission (4) est raccordée au moyen d'un coude, notamment d'un coude à 90° (36).

17. Soufflante radiale selon une des revendications précédentes, caractérisée en ce que le carter est constitué de deux éléments de carter, le premier élément de carter (1) présentant une paroi périphérique (12) entourant le rotor radial (3), une région de transition (13) et une paroi frontale (11) limitrophe du rotor radial (3) et pourvue d'une admission axiale (4), et le deuxième élément de carter (2) présentant une paroi de couvercle (2) fermant le côté arrière du carter et pourvue d'une spirale intérieure intégrée et d'un palier tubulaire (21) intégré, de telle sorte que le plan de séparation entre les deux éléments de carter s'étend entre la paroi périphérique (12) et la paroi de couvercle (2).

18. Soufflante radiale selon une des revendications précédentes, caractérisée en ce que le carter est constitué de deux éléments de carter, le premier élément de carter (12, 2) présentant une paroi périphérique (12) entourant le rotor radial (3) et une paroi de couvercle (2), qui ferme cette paroi périphérique (12) sur le côté frontal et porte le moteur d'entraînement (8) pour le rotor radial (3), et le deuxième élément de carter (11, 4) présentant une paroi frontale (11), limitrophe du rotor radial (3), et l'admission axiale (4).

19. Soufflante radiale selon la revendication 18, caractérisée en ce que le plan de séparation (37) entre les deux éléments de carter s'étend entre la paroi périphérique (12) et la paroi frontale (11).
